Europäisches Patentamt

European Patent Office

Office européen des brevets

(19)

(11) **EP 1 211 842 A1**

(12) **EUROPEAN PATENT APPLICATION**

(43) Date of publication:
**05.06.2002   Bulletin 2002/23**

(51) Int Cl.[7]: **H04L 12/18**, H04L 12/26,
H04L 12/24

(21) Application number: **00310634.1**

(22) Date of filing: **30.11.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **BRITISH TELECOMMUNICATIONS public limited company**<br>**London EC1A 7AJ (GB)** | (72) Inventor: **The designation of the inventor has not yet been filed**<br><br>(74) Representative: **Evershed, Michael et al**<br>**BT Group Legal Services,**<br>**Intellectual Property Department,**<br>**8th Floor, Holborn Centre,**<br>**120 Holborn**<br>**London EC1N 2TE (GB)** |

(54) **Network management apparatus**

(57)     The invention is concerned with a method of monitoring one or more network devices, where the or each network device is located in a different respective domain in a network, and the or each network device is operable to broadcast one or more types of multicast data to one or more other network devices in other different domains. Moreover the or each network device is operable to receive, as input, data broadcast from the one or more other network devices. The method of the invention includes the steps of:

(i) identifying one or more of said network devices for monitoring;
(ii) connecting to the or each identified network device;
(iii) broadcasting multicast data to the or each identified network devices;
(iv) receiving one or more types of messages representative of multicast data broadcast from the or each identified network devices at intervals; and
(v) storing the or each received messages for analysis thereof.

Figure 2

MSDP

**Description**

The present invention relates to a network management apparatus, and is particularly suitable for monitoring network devices that are running multicast protocols.

One of the most commonly used Multicast protocols to control transport of multicast data is Protocol Independent Multicast - Sparse Mode (PIM-SM). PIM-SM is an intra-domain protocol, so that, if a source is transmitting content S1, G1 within domain A, devices within domain A can receive content corresponding to S1, G1. In order to provide inter-domain connectivity for PIM-SM multicast content, a new protocol, Multicast Source Discovery Protocol (MSDP), which is widely used by Internet Service Providers, has been developed.

One of the consequences of using MSPD, and thus taking advantage of inter-domain connectivity, is an increase in multicast traffic over the Internet, because customers now have access to more multicast content than they had before. Increasing traffic places increasing demands on network devices and network capacity, which generates a corresponding need for adequate network management methods. These network management methods need to monitor loadings on network devices and identify problems, preferably without introducing a significant volume of test-related network traffic.

The Simple Network Management Protocol (SNMP) is typically used to probe network devices and retrieve information about the operating conditions of that device. SNMP Messages are sent to a Management Information Base (MIB), which stores a range of operating statistics (written under the control of the operating system in operation on the device) on the devices. However, management systems that rely on SNMP clearly generate monitoring-specific network traffic. If the status of a network device changes regularly, as is the case with MSDP traffic (described below), then a significant volume of SNMP traffic could be generated.

A group within the National Science Foundation has developed a tool, known as "Looking Glass™" which performs queries, including MSDP-related queries, on multicast-enabled network devices (among other devices). The tool, which is accessible over the Internet (http://www.ncne.nlanr.net/tools/mlg2.phtml), gathers information via TELNET by actually logging on to the network device and running a script that probes the MIB and various other storage areas thereon. However, this tool has several limitations: firstly additional network traffic, in the form of TELNET packets, is generated; and secondly the owner of the network device has to provide authentication information to the tool operator so that the operator can retrieve this information from the device. This may give rise to security concerns, as, if any of the probing TELNET packets were intercepted, the interceptor could potentially derive sufficient information from the packets to access the device without the knowledge of the device owner. In addition, and as a practical issue, the nature of the query is limited, and there is no post-processing of the data returned from the probed device. Workers from CAIDA and the University of California at Santa Barbara have collaboratively developed a tool named "Mantra™", which collects data, via TELNET, at predetermined intervals from selected routers. This data includes information from MBGP table, BGP table, Multicast routing table and MSDP SA cache, and is used to provide a snapshot of information. The data retrieved from the tables is summarised into graphs to show the size of tables, number of sources, number of groups etc. For Mantra™ to provide information that is useful, it needs to collect data from routers at key network locations, and is dependent upon information being available at a Command Line Interface (CLI) of a respective router being accurate. To date, only six routers situated at public exchange points are being monitored by Mantra™, and a significant amount of control state data (that passes through their private peering points) may be absent from the data collected from these routers. Thus the tool generates additional network traffic when probing the devices, and there is no guarantee that the information that is retrieved is accurate. In addition, there are security concerns similar to those discussed above in respect of LookingGlass™.

According to a first aspect of the present invention, there is provided a method of monitoring one or more network devices, where the or each network device is located in a different respective domain in a network, and the or each network device is operable to broadcast one or more types of multicast data to one or more other network devices in other different domains. Moreover the or each network device is operable to receive, as input, data broadcast from the one or more other network devices. The method of the invention includes the steps of:

> (i) identifying one or more of said network devices for monitoring;
> (ii) connecting to the or each identified network device;
> (iii) broadcasting multicast data to the or each identified network devices;
> (iv) receiving one or more types of messages representative of multicast data broadcast from the or each identified network devices at intervals; and
> (v) storing the or each received messages for analysis thereof.

Preferably the connecting, broadcasting, receiving, storing and recording steps in respect of the identified network devices are performed in accordance with a predetermined schedule so as to control flow of messages. Conveniently a network device can be identified at any time, wherein details of said identified network device are stored in temporary storage and read therefrom in accordance with the predetermined schedule.

Preferably the analysis of the stored data includes organising the received messages in terms of multicast group address so as to identify, for each multicast group address, which, if any, of the identified network devices is not broadcasting multicast messages corresponding to the multicast group address. Advantageously the analysis of the stored data also includes calculating, for each multicast group address, an average gap between instances of receipt of the received messages.

Advantageously there is provided a corresponding apparatus for monitoring one or more network devices, the or each network device being located in a different respective domain, being operable to broadcast one or more types of multicast data to one or more other network devices located in other different domains and being operable to receive, as input, data broadcast from the one or more other network devices, the apparatus comprising:

(i) input means for identifying one or more of said network devices for monitoring;
(ii) connecting means for connecting to the or each identified network device;
(iii) communicating means for broadcasting multicast data to the or each identified network devices;
(iv) receiving means for receiving one or more types of multicast data broadcast from the or each identified network devices at intervals; and
(v) storage means for storing the or each received message for analysis thereof.

According to a second aspect of the present invention there is provided a method of testing operation of one or more network devices, where the or each network device is located in a different respective domain in a network, is operable to broadcast one or more types of multicast data to one or more other network devices located in other different domains and is operable to receive, as input, data broadcast from the one or more other network devices. The method comprises the steps of

(i) identifying one or more of said network devices;
(ii) broadcasting one or more test data to at least one of the identified network devices, the one or more test data comprising a source network address corresponding to a source of the test data, a Multicast Group address and a network address of a network device at which the test data has been registered by the source;
(iii) receiving messages representative of the test data at intervals; and
(iv) analysing the received messages in accordance with a plurality of predetermined criteria so as to establish how the or each identified network device processed the test data, thereby testing operation of the or each network device.

Preferably the network address of a network device at which the test data has been registered by the source is a network address corresponding to one of the identified network devices. Alternatively the network address of a network device at which the test data has been registered by the source is a network address corresponding to a device performing the broadcasting and receiving steps (ii) and (iii).

Advantageously the broadcasting and receiving steps in respect of the identified network devices are performed in accordance with a predetermined schedule so as to control flow of data. In addition, the received messages are stored, and the analysing step (iv) is performed on the stored data so as to enable said analysis to occur independently of the scheduled steps.

Conveniently there is provided a corresponding apparatus for testing operation of one or more network devices, the or each network device being located in a different respective domain in a network, being operable to broadcast one or more types of multicast data to one or more other network devices located in other different domains and being operable to receive, as input, data broadcast from the one or more other network devices, the method comprising the steps of

(i) identifying means for identifying one or more of said network devices;
(ii) communicating means for broadcasting one or more test data to at least one of the identified network devices, the one or more test data comprising a source network address corresponding to a source of the test data, a Multicast Group address and a network address of a network device at which the test data has been registered by the source;
(iii) receiving means for receiving messages representative of the test data at intervals; and

analysing means for analysing the received messages in accordance with a plurality of predetermined criteria so as to establish how the or each identified network device processed the test data, thereby testing operation of the or each network device.

Further aspects, features and advantages of the present invention will be apparent from the following description of preferred embodiments of the invention, which refers to the accompanying drawings, in which

Figure 1 is a schematic diagram showing basic operation of a Multicast tree building protocol;
Figure 2 is a schematic diagram showing Inter-domain multicast connectivity in accordance with the Multicast Source Discovery Protocol (MSDP);
Figure 3 is a schematic diagram showing an embodiment of apparatus for monitoring inter-domain multicast connectivity according to the invention located in a network;
Figure 4 is a schematic block diagram showing an embodiment of network management apparatus according to the invention;
Figures 5a and 5b comprise a schematic flow diagram showing a flow of events processed by the embodiment of Figure 4;
Figure 6a is a schematic diagram showing MSDP peering in a mesh arrangement of four MSDP enabled routers;
Figure 6b is a schematic diagram showing Reverse Packet Forwarding in operation between four MSDP enabled routers;
Figure 7 is an illustration of an output display produced according to the embodiment of Figure 4;
Figure 8 is an illustration of an input display produced according to the embodiment of Figure 4;
Figure 9 is an illustration of a further input display produced according to the embodiment of Figure 4;
Figure 10 is an illustration of a further output display produced according to the embodiment of Figure 4;
Figure 11 is an illustration of another output display produced according to the embodiment of Figure 4; and
Figure 12 is an illustration of yet another output display produced according to the embodiment of Figure 4.

In the following description, the terms "device", "keepalive messages", "host", "receiver" and "domain" are used. These are defined as follows:

"device": any equipment that is attached to a network, including routers, switches, repeaters, hubs, clients, servers; the terms "node" and "device" are used interchangeably;
"keepalive": Message sent by one network device to inform another network device that the virtual circuit between the two is still active;
"host": equipment for processing applications, which equipment could be either server or client, and may also include a firewall machine. The terms host and end host are used interchangeably;
"receiver": host that is receiving multicast packets (IP datagrams, ATM cells etc.); and
"domain": a group of computers and devices on a network that are administered as a unit with common rules and procedures. For example, within the Internet, domains are defined by the IP address. All devices sharing a common part of the IP address are said to be in the same domain.

Overview

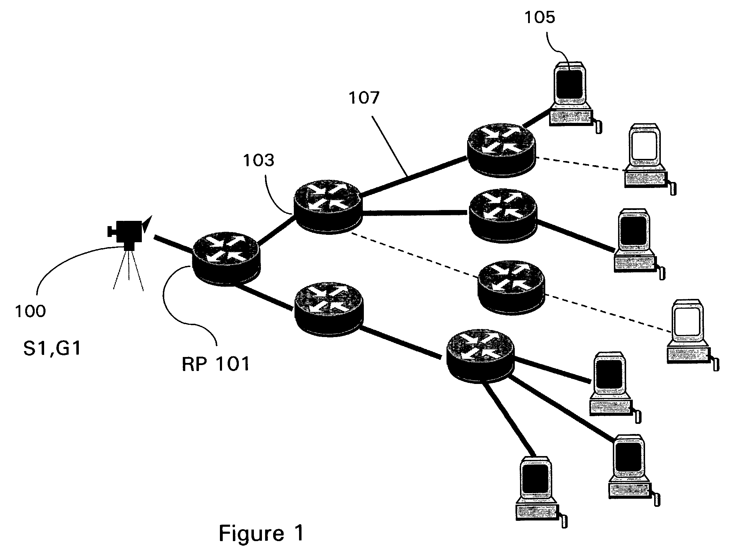

Figure 1 shows a typical configuration for a network transmitting multicast data using the PIM-SM (Protocol Independent Multicast - Sparse Mode) intra-domain protocol. Multicast content corresponding to multicast group address G1 is registered at a Rendezvous Point router (RP) 101, which is operable to connect senders S1 100 and receivers 105 of multicast content streams, using any IP routing protocol. Lines 107 indicate paths over which multicast content is transmitted. The mechanics of multicast request and delivery processes are known to those with ordinary skill in the art, and further details can be found in "Multicast Networking and Applications", Kenneth Miller, published by Addison Wesley.

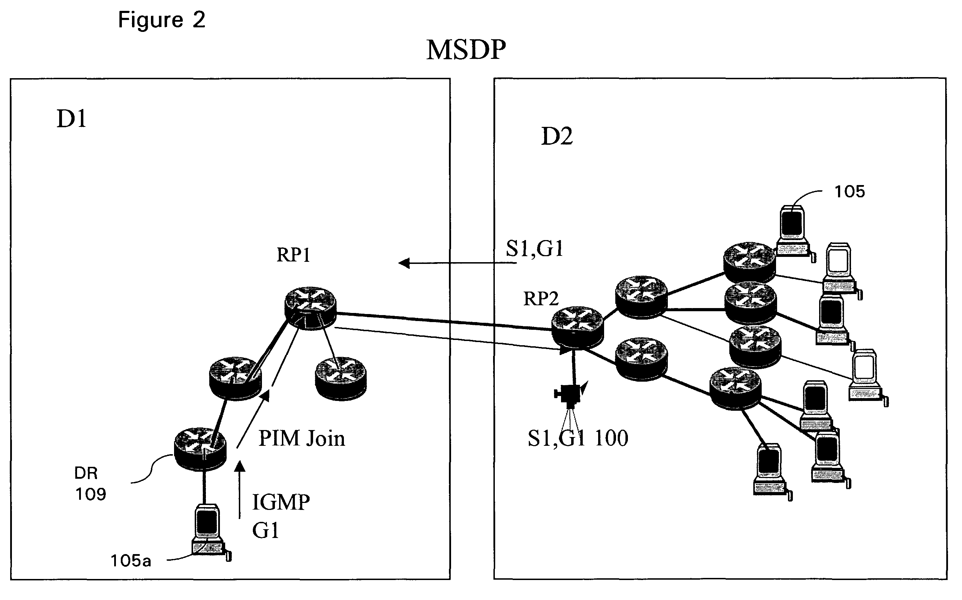

Figure 2 shows a configuration for inter-domain multicast connectivity between a first domain D1 and a second domain D2, as provided by Multicast Source Discovery Protocol (MSDP). As described with reference to Figure 1, sender S1 100, located in the second domain D2, registers its content corresponding to multicast group address G1 at RP2, which distributes the content to requesting receivers 105. One of the receivers 105a in the first domain D1 registers a request for multicast content, via Internet Group Messaging Protocol (IGMP), corresponding to group address G1. In accordance with PIM-SM protocol, a join request is transmitted from Designated Router (DR) 109 in the first domain D1 to the Rendezvous Point router RP1 of the first domain, where multicast content for the first domain D1 is registered and stored for onward transmission. Both of the Rendezvous Point routers RP1, RP2 are running MSDP, which means that multicast content that is registered at RP2 in the second domain D2 is broadcast to RP1 in the first domain D1 (and vice-versa) via a Source, Active (SA: unicast source address, multicast group address) message. These messages are stored in a SA cache on respective RP.

In the example shown in Figure 2, a SA message corresponding to S1, G1 is registered and stored on RP1, which then knows that content corresponding to S1, G1 is available via RP2, and can issue a join request across the domains D1, D2. RP2, in response to the join request, then sends the content across the domain to RP1, which forwards this to the requesting receiver 105a, in accordance with the PIM-SM protocol. Routers that are enabled to run MSDP are always Rendezvous Point routers (RP) known as "peers", and the process of advertising SA messages between peers is known as "peering". Thus, RP1 and RP2 are both peers.

These SA messages are broadcast every 60 seconds to all MSDP peers with message transmission spread across the "broadcast" (periodic refresh) time to smooth out the delivery of SA messages. This, together with the fact that the number of MSDP peers and SA messages is continually increasing, means that monitoring the behaviour of MSDP peers and locating problems between peers is extremely difficult. As described earlier, typical network management tools, such as tools that gather data via SNMP, generate additional network traffic when probing devices; such tools could potentially probe each peer, but this would generate a proportionate amount of additional network traffic. Moreover, because the SA messages are broadcast every 60 seconds, in order to keep an accurate log of data stored on every peer, a probe could be sent to each peer every 60 seconds. This additionally presents serious scalability issues.

### Overview of MSDP Monitor

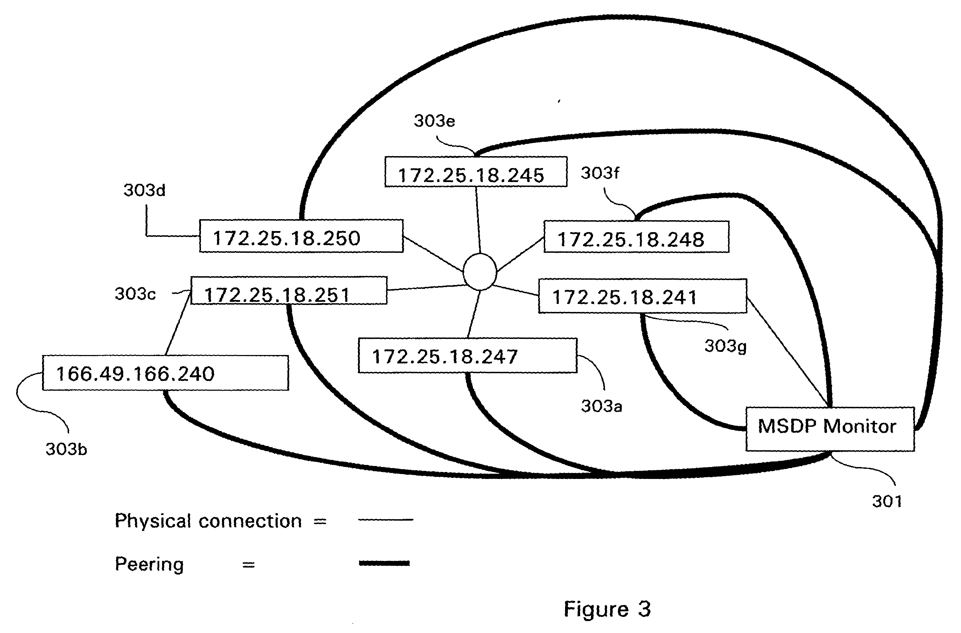

Figure 3 shows an embodiment of the invention, generally referred to as MSDP Monitor 301, acting as a peer, located in a Local Area Network (LAN), peering with several RP 303a - g that are also peers.

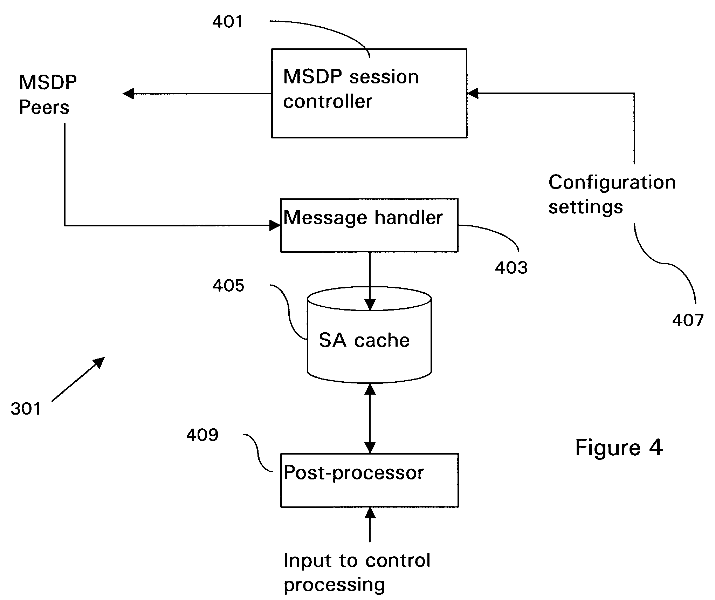

Figure 4 shows the basic components of the MDSP Monitor 301: Configuration settings 407 are input to MSDP session controller 401, which controls TCP sessions and MSDP peering between the Monitor 301 and other peers. The configuration settings 407 include identification of network addresses of peers that the Monitor 301 is to communicate with, and the type of data that the Monitor 301 should send to the peers. As the Monitor 301 is seen by all of the other peers in the network 303a - g as another peer, the Monitor 301 will be sent broadcasts of SA messages from each of these peers 303a - g. These messages are received by message handler 403 for parsing and storing in a SA cache 405. A post-processor 409 accesses the SA cache 405 and processes the data in the SA cache 405 in accordance with a plurality of predetermined criteria that can be input manually or via a configuration file.

Embodiments of the present invention are therefore regarded as conventional MSDP peers by other peers in the network. Advantages of the embodiment can readily be seen when the monitor 301 is compared with conventional network management tools. Firstly, there is a relative reduction in network traffic - the monitor 301 works on information contained in SA messages that have been broadcast between peers and are therefore already in the network. Thus the monitor 301 does not need to probe MSDP peers, and does not generate any additional network traffic for the purposes of network monitoring and testing outside of the MSDP protocol.

Further advantages result from specific features of the embodiments, such as the way in which events are scheduled within the monitor 301. For example, changes can be made to peering events - e.g. peers can be added, deleted, made active or shutdown - without affecting other peering sessions. The scheduling aspects of the monitor 301 ensure that changes to peering status and/or real SA messages are controlled, thereby providing a predictable flow of events. Thus the monitor 301 is scalable.

Preferably, the monitor 301 can inject test SA messages into the network and track how peers in the network handle these messages. In one embodiment the monitor 301 itself appears to originate the test SA message, and in another embodiment the monitor 301 can make the test SA message appear to originate from another peer. This allows the monitor 301 to check forwarding rules in operation on the peers. The configuration settings 407 are flexible, so that the peer to which the test message is sent can be changed easily.

Events can be advantageously scheduled in relation to the processing of incoming SA messages. For example, the monitor 301 schedules MSDP session events, taking into account SA messages that are broadcast to the monitor 301, so that if the monitor 301 makes a change to an existing peering session, this change is synchronised with any incoming SA messages. In order to account for size variation of incoming SA messages, the monitor 301 can be configured to read a maximum message size from the inbound buffers (e.g. 5KB), which evens out inter-cycle processing times, resulting in a reduced amount of jitter.

In addition, the processing of MSDP session events is decoupled from the analysis of incoming SA messages and changes in configuration settings. This enables information such as router policy rules; SA broadcast frequency; forwarding rules; number of sources transmitting content corresponding to a particular multicast group address; number of source addresses that are registered at each RP, which provides an indication of the distribution of multicast content, and general message delivery reliability and transit times across the network to be identified.

The features that realise these advantages are described in detail below.

As stated above, the session controller 401 sets up MSDP peering sessions with other MSDP peers in accordance with configuration settings 407. These configuration settings 407 include network addresses of RP to peer with, status of peerings, and SA messages to send to peers. These configuration settings 407 can be set automatically or manually, via a user interface, as is described in more detail below.

Once the session controller 401 has received new, or modified configuration settings 407, the session controller 401 activates a new MSDP session or modifies an existing MSDP session accordingly. As is known to those with ordinary skill in the art, MSDP is a connection-oriented protocol, which means that a transmission path, via TCP, has to be created before a RP can peer with another RP. This is generally done using sockets, in accordance with conventional TCP management. Thus when the MSDP Session Controller 401 receives an instruction to start an MSDP peering session with a specified RP, the session controller 401 firstly establishes a TCP connection with that specified RP. Once the TCP connection has been established, SA messages can be transmitted via the TCP connection, and the monitor 301 is said to be "peering" with the peer (specified RP).

Once an MSDP session has started between peers, and while a SA message is live (i.e. the source S1 is still registering the content at its local RP), the RP will advertise the SA in an MSDP SA message every 60 seconds. Thus peers receive SA messages once every 60 seconds while the source S1 is live. Peers timestamp the SA message when it is received and save the message as an SA entry in their respective SA cache. When the SA entry expires in the multicast routing state on the RP, say because the source S1 is shutdown, the SA message is no longer advertised from the RP to its peers. Peers check the timestamp on messages in the SA cache and delete entries that have a timestamp older than X minutes (X is configurable). If an MSDP message is not received from a peer within 90 seconds, the monitor 301 automatically shuts down the session.

As described above, embodiments of the monitor 301 involve the monitor 301 peering with other MSDP peers, and as such the monitor 301 looks as if it is another peer to the other RP that are receiving and transmitting MSDP messages. MSDP rules on cache refreshing are defined at http://www.ietf.org/internet-drafts/draft-ietf-msdp-spec-06.txt. In order for the monitor 301 to maintain MSDP sessions with these other peers, it has to send either a SA message or a keepalive message to these peers at least once every 90 seconds.
The monitor 301 operates in at least two modes:

1) Monitoring treatment of SA messages by peers: the objective is to determine which SA messages are received and stored by peers. As described above, in order for the monitor 301 to maintain MSDP sessions with peers, it has to transmit messages to the peers. However, in this mode of operation the monitor 301 does not want to send "real" SA messages, so the session controller 401 sends "keepalive" messages instead;
2) Testing progression of SA messages between peers: the objective is to determine how SA messages are distributed between peers, so the session controller 401 sends "real" SA messages corresponding to a unicast source address and multicast group address specified in the configuration settings 407.

The above discussion shows that the monitor 301 receives and sends a variety of messages. These sending and receiving actions, and the handling of various events that comprise or are spawned from the actions, require scheduling in order to ensure coherent operation of the monitor 301. For example, the handling of incoming SA messages, which can be received from peers at any time, and operation of the session controller 401, which has to make changes to existing sessions, initiate new sessions and broadcast SA messages in accordance with the configuration settings 407, has to be controlled. Furthermore, inbound buffers, which are inbound storage areas comprising information received from a remote peer on a specified socket, have to be serviced (e.g. writing to SA cache 405) and the information contained therein post processed (as described in more detail below), in order to gather information from the testing and monitoring processes, and this has to be accounted for in the scheduling process.

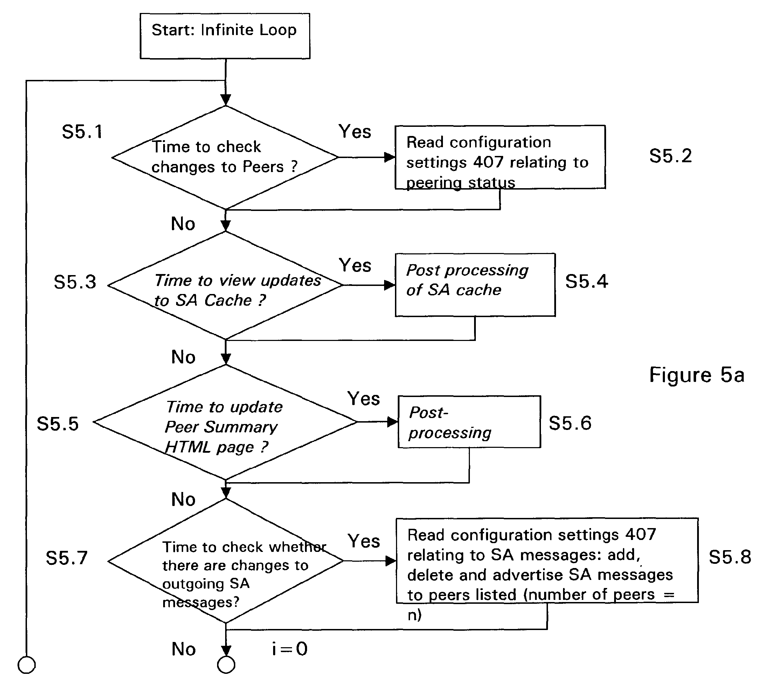

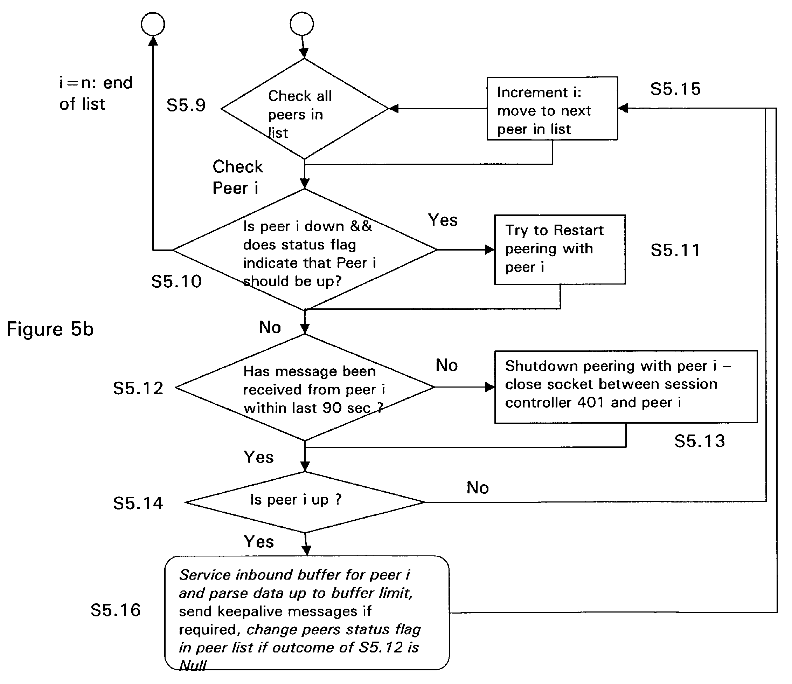

Figures 5a and 5b, in combination, show an example scheduling process according to the embodiment, which combines processing of various periodic events with servicing inbound buffers for each peer containing SA messages. The schedule is an infinite loop that is designed to provide as much time as possible to service inbound buffers. In the Figure, events relating to actions of the session controller 401 are in normal font, and events relating to servicing inbound buffers and post-processing of the SA cache are in italics (and discussed later). ENTER LOOP:

ξ Step S5.1: Is it time to check whether there are any changes to the status of peers? This time is set to loop every 10 seconds, so that if 10 seconds has passed since the last time S5.1 was processed, then the condition will be satisfied. Note that this time is configurable and could be anything from 1 second to 600 seconds. Zero may also be specified and is a special case that has the effect of automatically disabling a check on peer status. This can be used where the administrator requires a strict control of peering. If Y Goto S5.2, else Goto S5.3;
ξ Step S5.2: Read configuration settings 407: the session controller 401 reads a list of peers (number of peers=n) together with a status flag (either operational or down) against each peer, noting any changes to the list of peers - i.e. addition of new peers, or changes to status flags against peers that are already on the list. If a new peer is added to the list, with status flag set to operational, this indicates that a new session is to be started with that peer; this is handled at steps S5.10 - S5.11. If a status flag is set to down, this indicates that the corresponding session is to be stopped, and the session controller 401 shuts down the respective existing TCP session at this point (closes corresponding socket). In one embodiment of the monitor 301, "shutting down" involves ending the MSDP session, but leaving the peer on the list of peers (with status flag set to "down"). In this embodiment, the SA cache is flushed for this peer, but other data that has been maintained for the peer, such as timers and counters, are stored (e.g. for use if that peering session were to be restarted). Alternatively, in addition to "shutting down" the MSDP session, the peer could be removed from the list, resulting in deletion of all information collected in respect of the peer.

ξ Steps S5.3 - S5.6: Post-processing activities - see below;

ξ Step S5.7: Is it time to check for any changes to outgoing SA messages? If Y Goto S5.8, else S5.9;

ξ Step S5.8: Read configuration settings 407 relating to test SA messages and process actions in respect of the test SA messages. These test SA settings detail the nature of a test SA message, together with an action to be performed in respect of that message - i.e. add, delete or advertise SA messages to some, or all, peers in the list of peers; Goto S5.9

ξ Step S5.9: Access the list of peers, for first peer in list set peer counter i = 0.;

ξ Step S5.10: Is i<n? If Y, Goto S5.1, If N, Check whether peer i is down and whether the status flag corresponding to this peer indicates that peer i should be operational. This combination (peer down, status flag operational) can arise in two situations - firstly if a new peer has been added to the list of peers, and secondly if there has been a problem with peer i - e.g. the router has stopped working for any reason. If the status flag indicates that peer i should be up, Goto S5.11;

ξ Step S5.11: Try to (re)start the MSDP session with peer i by opening a TCP socket for connection with peer i;

ξ Step S5.12: Check whether a message has been received from peer i in the last 90 seconds. This involves checking an internally maintained timestamp associated with keepalive messages for peer i. The timestamp will be less than 90 seconds old if the peering is active (see below). If N Goto S5.13, else Goto S5.14

ξ Step S5.13: Close the socket opened at S5.11 and Goto S5.14;

ξ Step S5.14: If message has been received at S5.12 then peer i is up operationally, Goto S5.16. If peer i is down operationally, Goto S5.15;

ξ Step S5.15:Increment i and move to the next peer on the list; Goto S5.10;

ξ Step S5.16: Carry out some post-processing (see below) and send keepalive messages to peer i if no real SA messages were sent to peer i at S5.8 (i.e. monitor 301 not in testing mode). Goto S5.15.

The post-processing carried out at Step S5.16 involves reading the inbound buffer corresponding to peer i, which comprises information received from the peer i stored on the corresponding inbound socket by the operating system. This information can be one of five valid message types (e.g. SA, SA request, SA response, Keepalive or Notification messages), and the data handler 403 is responsible for reading the information and processing it:

*SA:* SA messages contain the information about active S,G pairs and make up the majority of messages received; valid SA messages are stored in the SA cache 405 (these are the message type that are processed by the post processor 409). SA messages comprise RP address, Source address and Group address;

*SA request and SA response:* These are only used by non-caching MSDP routers. The monitor 301, and virtually all MSDP routers in the Internet, is of the caching type, so these messages almost never get used. The monitor logs these 301 messages as these indicate non caching MSDP routers or routers with requesting receivers but no active sources;

*Keepalive messages:* These are used to reset a received keepalive timestamp for a peer;

*Notification messages:* These are used inform a peer of a particular problem e.g. bad message types, bad source addresses, looping SA messages. On receipt of a notification message with a specific bit set, the corresponding MSDP peering session is reset.

By default each inbound buffer is 65KB in size (although this can vary with operating system on which the monitor 301 is run) so the time taken to process 0 > 65KB per peer can cause several seconds difference in processing all of the inbound buffers between cycles (especially when run on different platforms or running other tasks). In an attempt to balance inter-cycle processing times, and thus reduce jitter, the data handler 403 can be configured to read a maximum message size from the inbound buffers (e.g. 5KB).

The data handler 403 stores the information per peer:

```
struct msdp_router {
  char router[25];              /* IP address of MSDP Peer */
  unsigned char mis_buf[12];    /* Temp. buffer to store SA fragments */
  int soc;                      /* pointer to TCP socket */
  time_t R_keepalive;            /* Receive Keepalive, time since last input from peer */
  time_t S_keepalive;            /* Send Keepalive, time since we last sent a packet to the
peer */
  time_t up_time;               /* Time since last UP/Down transition */
  int status;                   /* Operational Peer Status, 1==UP 0==down */
  int admin_status;             /* Admin Status of Peer, 1==Enable, 0==Disable */
  int match;                    /* Temp. flag used in searches */


  int sa_count;                 /* Number of valid SA messages from Peer currently in Cache
*/
  int frag;                     /* Fragmentation flag, 1==process fragment, 0==new packet */
  int data;                     /* Flag to show that additional bytes received == data, so drop
them*/
  int stub;                     /* Flag to denote processing a very short SA fragment > 8
bytes */
  unsigned int missing_data;    /* Counter to track the number of bytes missing in fragment */
  unsigned int offset;           /* TCP data segment offset, point to start processing from */
  unsigned int reset_count;     /* Number of UP/Down transitions */
  int swt_frg;                   /* Retain MSDP packet type ID, so fragment handled
correctly */
  int cnt;              /* Remember the number of outstanding SA's for this RP between
fragments */
  unsigned long int rp;         /* Temp storage of RP address between fragments */
};
```

The data handler 403 then places the following information in the SA cache 405:

```
struct msdp_sa {
  unsigned long int peer;        /* MSDP Peer IP address: peer from which the SA
message was received */
  unsigned long int rp;           /* RP address for this S,G pair */
  unsigned long int source;      /* Source address */
  unsigned long int group;       /* Group address */
  unsigned long int count;       /* counter = number of times SA received */
  time_t first;                  /* Timestamp: time entry first received */
  time_t last;                   /* Timestamp: time entry last received  */
};
```

Referring back to Figure 5, steps S5.3 and S5.4, which trigger post-processing of the SA cache 405 and are run periodically (nominally every 10 seconds), comprise writing the SA cache 405 to a file. Steps S5.5 and S5.6, which are also run periodically, comprise reading data from the file populated at S5.4 and creating a web page containing the data.

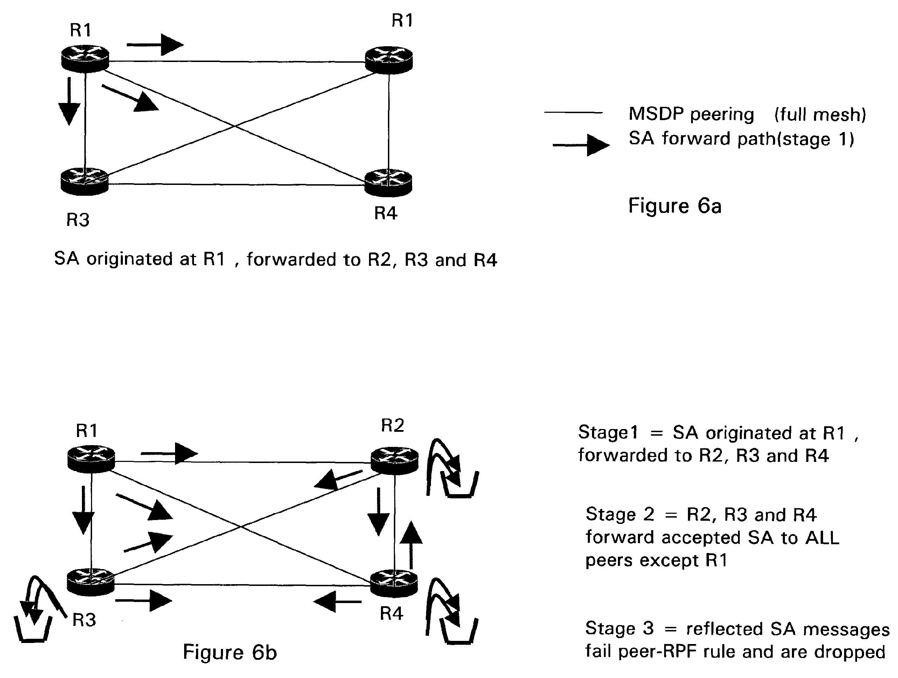

In conventional MSDP routing of SA messages, forwarding checks are performed on incoming messages at each peer to prevent flooding the network with multiple copies of the same SA messages and to prevent message looping. This can be done by forming a mesh between MSDP peers, as shown in Figure 6a, so that, for peers within a mesh, SA messages are only forwarded from the originating peer to each of the other peers in the mesh. Alternatively, incoming SA messages are flooded out of every interface of every peer (except the incoming interface), and peers then independently perform Reverse Path Forwarding (RPF) analysis on the messages, as shown in Figure 6b.

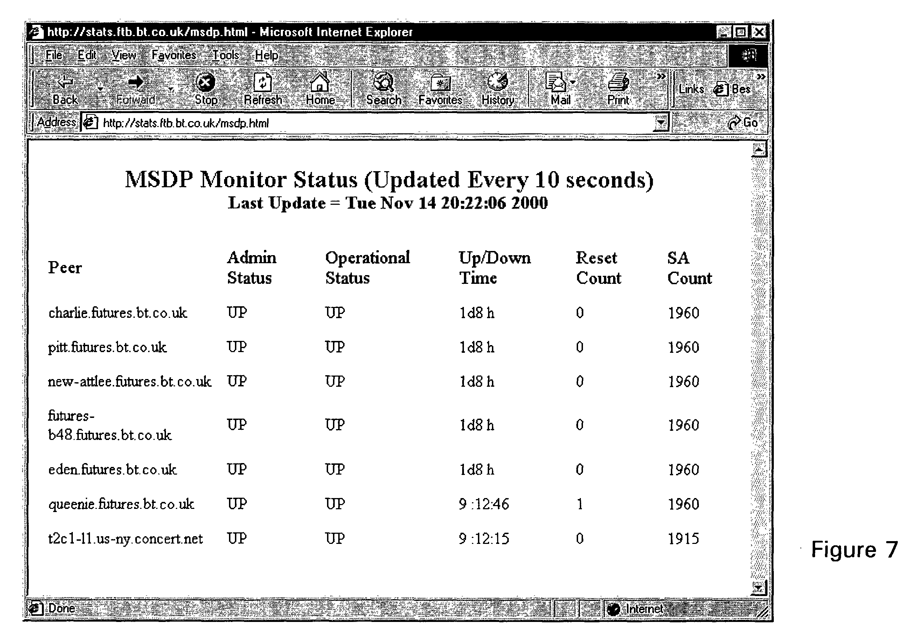

A single mesh operates independently of any other meshes that may be in operation in the network. In one embodiment, the monitor 301 itself forms a single mesh. As a result, all of the SA messages broadcast from each of the peers 303a - g are forwarded to the monitor 301, as shown in Figure 3, and potentially none of the SA messages are deleted prior to storing in the SA cache 405. Figure 7 shows the web page created at S5.6. The right hand field, "SA count" details the number of SA messages that have been received from the peer detailed in the left hand column.

As incoming messages have not been processed for duplicates, this field provides information about how the peers are handling SA messages: if all of the peers were handling the messages identically, then an identical SA count would be expected for all peers. However, as can be seen from Figure 7, the last peer in the list, t2c1-l1.us-ny.concert. net is broadcasting less SA messages than the other peers. This indicates that this peer may be applying some sort of filter to block incoming SA messages, blocking outbound SA messages, or that SA messages have been blocked at a previous point in the network. One of the advantages of the invention is thus that additional information, such as peering policy, can be mined from the raw data received by the monitor 301. In this case, the advantage results from the fact that the monitor 301 forms an independent mesh and therefore does not automatically remove duplicate SA messages.

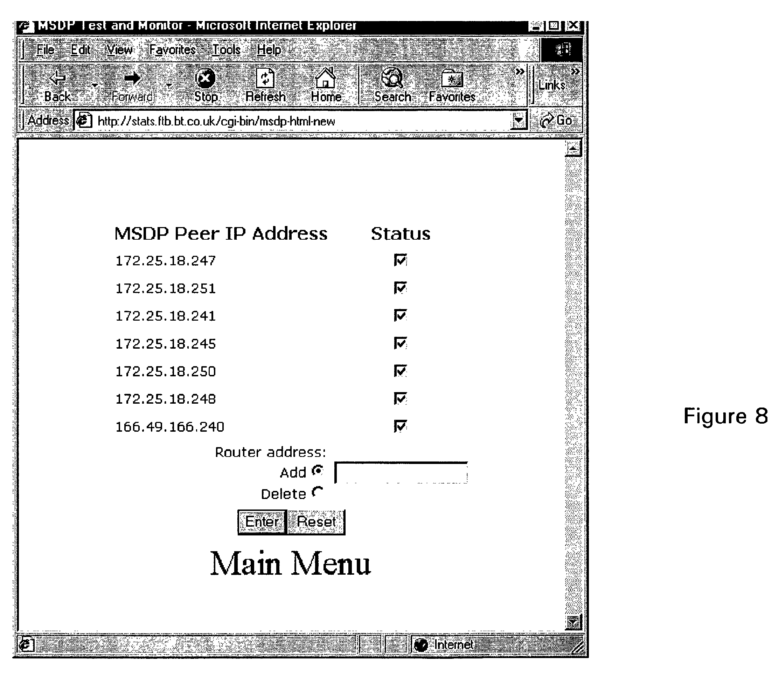

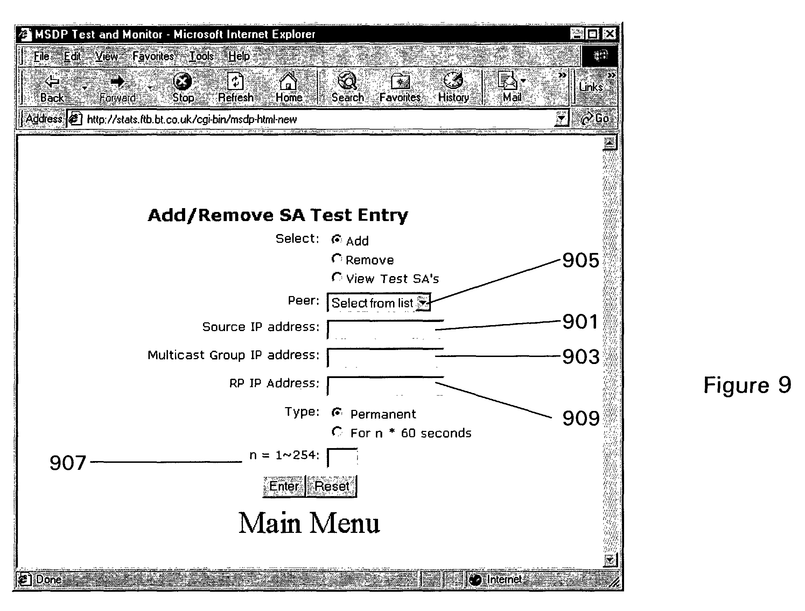

As described above, the configuration settings 407 can be modified manually, preferably with authentication of the user making the modifications. In one embodiment the user inputs a username and password to a TACAS server, which can then verify the login credentials via either static password files or by token authentication such as Security Dynamics SecurID, as is well known to those of ordinary skill in the art. Once the user has been authenticated he can modify the configuration settings 407 via a GUI, such as those shown in Figures 8 and 9. Possible changes include adding peers, changing the status of an existing peer (Figure 8), and defining an SA message to be broadcast to other peers (Figure 9). Note that once changes have been made to the configuration settings 407, the settings are written to a file. File locking is used to eliminate data corruption while changes are taking place, thereby ensuring that only one change can be made at a time.

Figure 9 shows an interface that can be used to input "real" SA messages: the source and group addresses 901, 903 of the SA message to be broadcast can be specified, together with an IP address of a target peer 905 and a time for broadcasting the message 907. Note that when this time expires the corresponding SA message is deleted from the configuration settings 407 during the next processing cycle of step S5.8. The target peer 905 is the peer that the session controller 401 actually broadcasts the test SA message to. This input is then stored as a structure for reading by the session controller 401:

```
struct sa_local {
    unsigned long int peer;      /* MSDP Peer IP address, the peer the SA is sent to */
    unsigned long int source;    /* Source address */
    unsigned long int group;     /* Group address */
    unsigned long int rp;        /* RP address */
    unsigned long int life;      /* Specify time period SA is advertised: 0==for ever 1-n
== time period */
    int match;                   /* Temp. flag used in searches etc... */
    time_t start;                /* Timestamp: time SA was generated */
    time_t last;                 /* Timestamp: time SA was last announced */
};
```

In addition the user can specify an IP address of a RP 909 from which the test message "appears" to originate (i.e. the test SA message appears to originate from a RP other than the monitor 301). This is useful when testing for loops between peers (i.e. for checking that the peers are operating RPF correctly, or that the mesh group is operating as expected). For example, consider the following arrangement:

R1 ------- R2 ------ R3 ------ Monitor 301

where ------- indicates a TCP MSDP connection between devices, and R1, R2 and R3 are MSDP enabled RP routers. If the session controller 401 sends a test SA message to R3 using the IP address of R2 for the RP of the SA message, and if R3 regards the monitor 301 as a non mesh-group peer, R3 would be expected to drop the test message (i.e. under RPF R3 will not broadcast an SA message to a peer if it determines, via its routing tables, that this message was received from an unexpected peering. For the example, R3 receives an SA with the RP address equal to R2 but the message was actually received from the controller 401. R3 determines that this is wrong, so the message is dropped). If the monitor 301 is configured in mesh-group A and R1, R2, & R3 are configured as mesh-group B, then whatever the characteristics of the test SA message sent from the session controller 401, the test message would be expected to be broadcast from R3 to R2 (recall that packets are not subject to RPF checks in mesh groups). Note that R3 would never be expected to send the SA back to the monitor 301.

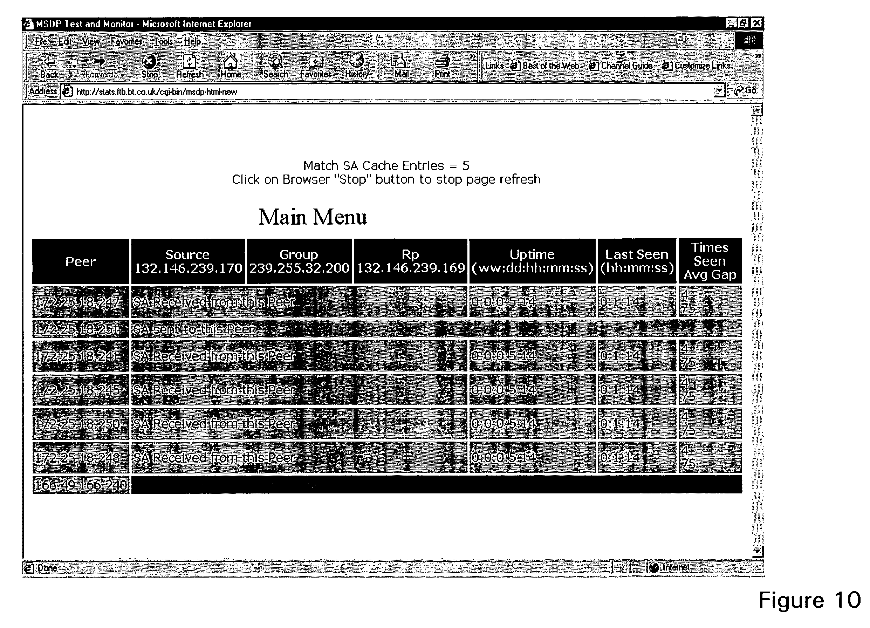

As stated above, other advantages of embodiments result from de-coupling the processing of data (post processor) from the operation of the session controller 401. For example, when the session controller 401 is sending test SA messages in accordance with the configuration settings input via the GUI shown in Figure 9, the post processor 409 can be triggered to examine the SA cache 405 for the presence of SA messages corresponding to the SA test message, and note which peers are broadcasting this to the monitor 301. This information can then be displayed graphically, for example as shown in Figure 10. This information is useful as it helps to determine whether SA messages are being correctly forwarded across the network. A failure to receive an SA message back from a peer may be due to a configuration issue by design or error, the network topology or peering policy. The data shown in Figure 10 relates to the network arrangement shown in Figure 3, and shows that the SA message was successfully sent to 172.25.18.251. The fact that all other 172.25.18.* peers successfully returned the message back to the monitor 301 indicates that 172.25.18.251 forwarded the SA message on without problems. As a message was not received from 166.49.166.240 this indicates that configuration or policy issues on either 172.25.18.251 or 166.49.166.240 prevented the message from being forwarded.

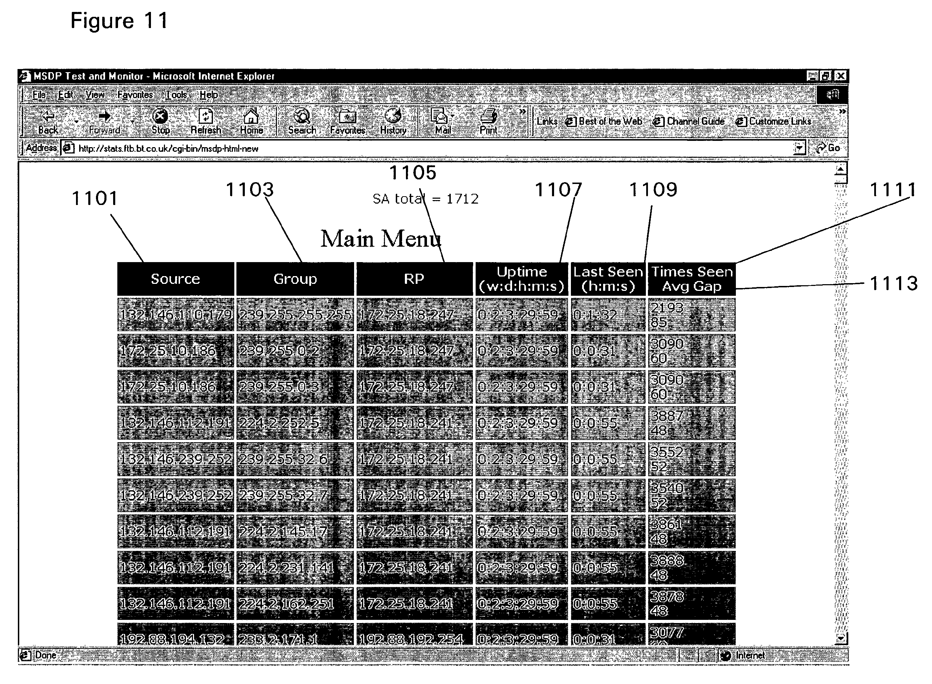

In one embodiment of the invention, the post processor 409 evaluates the number of unique SA messages broadcast to the monitor 301. This can be viewed graphically as shown in Figure 11, which shows source address 1101, multicast group address 1103, RP 1105 (i.e. the IP address of the router generating the SA message), the total uptime for SA message 1107, time SA message last seen 1109 (time of most recently received SA message), the number of times each SA message has been received 111 and the average time gap between SA messages 1113. The average gap 1113 can be determined by evaluating the following:

$$\text{Av gap} = \frac{\text{Time of most recently received SA message - Time SA message first received}}{\text{Number of times SA message seen}}$$

If a peer were broadcasting SA messages in accordance with MSDP standard, this time would be expected to be 60 seconds. However, as can be seen in several of the columns in Figure 11, some of the average gap times are less than 60 seconds, which could indicate, e.g. a peer is broadcasting more than one SA message. This further illustrates one of the advantages of the invention, which, as described above, is the combination of collecting a rich supply of raw data and processing the raw data independently of the collection process. This allows the raw data to be analysed for additional information, such as broadcast frequency of SA messages, which is otherwise extremely difficult to obtain.

Other information that can be mined from the raw cache data includes:

ξ identifying which SA messages were not broadcast and from which peers the messages were not broadcast (referring to RH column of Figure 7);
ξ identifying how many sources are transmitting content corresponding to a particular multicast group address; and
ξ identifying the number of source addresses that are registered at each RP, which provides an indication of the distribution of multicast content (and can highlight potential congestion problems).

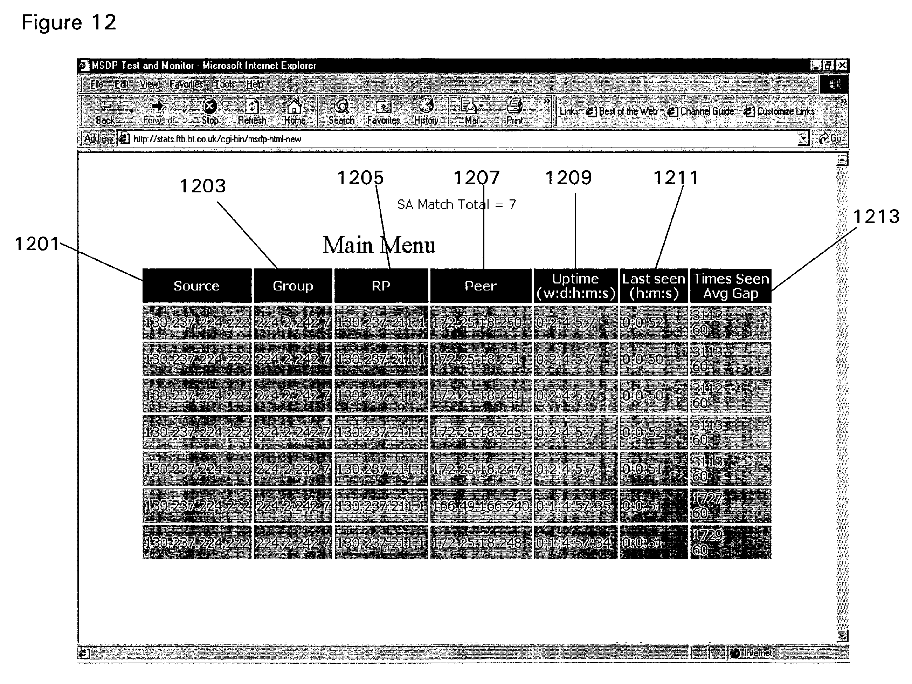

In addition, information relating to individual SA messages can be extracted. Referring to Figure 12, for a specified source and group address 1201, 1203, the RP 1205 at which the content is registered (recall that each SA message includes the RP at which the corresponding multicast content is registered), and the peers 1207 to which that RP broadcast an SA message corresponding to this content, can be identified, together with the total time 1209, and the last time 1211, that the SA message was broadcast from respective peers to the monitor 301. As with Figure 11, the average time can be evaluated and is shown in the right hand column 1213 of figure 12. The information shown in Figure 12 is useful as it provides an indication of message delivery reliability and transit times across the network.

Implementation details

The configuration settings 407 essentially comprise input and output files files. Input files are populated with input from the user (e.g. via Figures 7 and 9 as described above) - msdp.hosts is a file that comprises list of peers and their status and msdp.test is file that comprises details of SA test messages. Output files are populated with output from various operations of the session controller 401 and data handler 403 - msdp.data is a file that is populated at step S5.4 and msdp.html is an html file that is populated with data from msdp.data (step S5.6). The configuration settings 407 additionally include a configuration file (msdp.conf), which details the location of such files, and is read by the monitor 301 during initialisation. This allows the programs and the output files to be placed in any suitable directory on the system.

Example configuration file - msdp.conf:

```
# THIS CONFIG FILE SHOULD BE LOCATED IN THE /etc DIRECTORY
# The peer:, sa:, summary:, test: and invalid: tags are optional and used to set the
# interval between periodic events.
#peer: determines the interval between reading the msdp.hosts file, range is 0~300 seconds
#sa: determines frequency at which the msdp.data file is updated, range is 1~600 seconds
#summary: frequency at which the msdp.html file is updated, range is 1~600 seconds
#test: interval between reading  msdp.test file and sending (if required) SA messages, range 1~60 sec
#invalid: determines how old SA messages need to be before they are deleted from SA cache, range
# is  6 minutes to 90 days specified in seconds

data:
/home/barretma/
enddata:

html:
../
endhtml:

peer:
10
endpeer:

sa:
10
endsa:

summary:
10
endsummary:

test:
10


   endtest:

   invalid:
   360
   endinvalid:
```

**Claims**

1. A method of monitoring one or more network devices, the or each network device being located in a different respective domain in a network, the or each network device being operable to broadcast one or more types of multicast data to one or more other network devices in other different domains and the or each network device being operable to receive, as input, data broadcast from the one or more other network devices, the method including the steps of:

(i) identifying one or more of said network devices for monitoring;
(ii) connecting to the or each identified network device;
(iii) broadcasting multicast data to the or each identified network devices;
(iv) receiving one or more types of messages representative of multicast data broadcast from the or each identified network devices at intervals; and
(v) storing the or each received messages for analysis thereof.

2.  A method according to claim 1, further including, for each received message, recording a time of receipt thereof and storing the recorded time.

3.  A method according to claim 1 or claim 2, further including recording receipt of each type of multicast message received from the or each identified network devices in the form of a counter, so that each time a type of multicast message is received from a respective identified network device, a counter corresponding thereto is incremented.

4.  A method according to any one of the preceding claims, in which the multicast message broadcast at step (iii) is a keepalive message.

5.  A method according to any one of the preceding claims, in which each received message comprises a source network address corresponding to a source of the received message, a Multicast Group address and a network address of a network device at which the received message has been registered by the source, wherein the multicast group address identifies a type of multicast data, and in which the storing step includes storing said received message, together with a network address of whichever connected network device is broadcasting the received message.

6.  A method according to any one of the preceding claims, wherein the connecting, broadcasting, receiving, storing and recording steps in respect of the identified network devices are performed in accordance with a predetermined schedule so as to control flow of messages.

7.  A method according to claim 6, in which a network device can be identified at any time, wherein details of said identified network device are stored in temporary storage and read therefrom in accordance with the predetermined schedule.

8.  A method according to claim 6 or claim 7, in which the analysis of the stored data includes organising the received messages in terms of multicast group address so as to identify, for each multicast group address, which, if any, of the identified network devices is not broadcasting multicast messages corresponding to the multicast group address.

9.  A method according to any one of the preceding claims, in which the analysis of the stored data includes calculating, for each multicast group address, an average gap between instances of receipt of the received messages.

10. A method according to claim 9 when appended to claim 3, in which said calculating comprises identifying a first recorded time, identifying a second recorded time, identifying numbers corresponding to said first and second recorded times respectively, and dividing a difference between the first and second recorded times by a difference between respective first and second counters.

11. Apparatus for monitoring one or more network devices, the or each network device being located in a different respective domain, being operable to broadcast one or more types of multicast data to one or more other network devices located in other different domains and being operable to receive, as input, data broadcast from the one or more other network devices, the apparatus comprising:

(i) input means for identifying one or more of said network devices for monitoring;
(ii) connecting means for connecting to the or each identified network device;
(iii) communicating means for broadcasting multicast data to the or each identified network devices;
(iv) receiving means for receiving one or more types of multicast data broadcast from the or each identified network devices at intervals; and

(v) storage means for storing the or each received message for analysis thereof.

**12.** Apparatus according to claim 11, further including means for scheduling operation of the connecting means, communicating means, receiving means and storage.

**13.** A method of testing operation of one or more network devices, the or each network device being located in a different respective domain in a network, being operable to broadcast one or more types of multicast data to one or more other network devices located in other different domains and being operable to receive, as input, data broadcast from the one or more other network devices, the method comprising the steps of

(i) identifying one or more of said network devices;
(ii) broadcasting one or more test data to at least one of the identified network devices, the one or more test data comprising a source network address corresponding to a source of the test data, a Multicast Group address and a network address of a network device at which the test data has been registered by the source;
(iii) receiving messages representative of the test data at intervals; and
(iv) analysing the received messages in accordance with a plurality of predetermined criteria so as to establish how the or each identified network device processed the test data, thereby testing operation of the or each network device.

**14.** A method according to claim 13, in which the network address of a network device at which the test data has been registered by the source is a network address corresponding to one of the identified network devices.

**15.** A method according to claim 13, in which the network address of a network device at which the test data has been registered by the source is a network address corresponding to a device performing the broadcasting and receiving steps (ii) and (iii).

**16.** A method according to any one of claims 13 to 15, in which the broadcasting and receiving steps in respect of the identified network devices are performed in accordance with a predetermined schedule so as to control flow of data.

**17.** A method according to any one of claims 13 to 16, further including a step of storing the received messages, wherein the analysing step (iv) is performed on the stored data so as to enable said analysis to occur independently of the scheduled steps.

**18.** A method according to any one of claims 13 to 17, in which the predetermined criteria includes one or more packet forwarding rules that are in operation on the or each identified network device, so that for the or each network device, the analysing step (iv) comprises

(i) examining a respective packet forwarding rule,
(ii) evaluating forwarding behaviour to be expected in respect of the test data when processed in accordance with the respective packet forwarding rule, and
(iii) comparing the evaluated forwarding behaviour with the actual behaviour in order to establish how the or each identified network device processed the test data.

**19.** Apparatus for testing operation of one or more network devices, the or each network device being located in a different respective domain in a network, being operable to broadcast one or more types of multicast data to one or more other network devices located in other different domains and being operable to receive, as input, data broadcast from the one or more other network devices, the method comprising the steps of

(iv) identifying means for identifying one or more of said network devices;
(v) communicating means for broadcasting one or more test data to at least one of the identified network devices, the one or more test data comprising a source network address corresponding to a source of the test data, a Multicast Group address and a network address of a network device at which the test data has been registered by the source;
(vi) receiving means for receiving messages representative of the test data at intervals; and
(vii) analysing means for analysing the received messages in accordance with a plurality of predetermined criteria so as to establish how the or each identified network device processed the test data, thereby testing operation of the or each network device.

**20.** Apparatus according to claim 19, further including means for scheduling operation of the communicating means and receiving means.

**21.** Apparatus according to claim 19 or claim 20, further including storage means for storing said received message.

**22.** Apparatus for use in monitoring a plurality of networks, each network being operable to carry multicast traffic therein, the apparatus comprising:

communicating means for communicating multicast data from a first network to at least one other network;
storing means for storing data representative of said communications between the first network and the or each other network;
data analysing means for analysing the stored data so as to identify intra-network characteristics associated with each network in respect of the multicast traffic.

**23.** Apparatus according to claim 22, further comprising generating means for sending multicast test data to at least one of the networks, wherein the data analysing means is arranged to determine one or more behaviours in respect of the multicast test data.

**24.** Apparatus according to either claim 22 or claim 23, further comprising means for scheduling the communicating means, storing means and generating means so as to control flow of data.

**25.** Apparatus according to any one of claims 22 to claim 24, wherein said intra-network characteristics identifiable by the data analysing means includes at least one of delay times within and between networks and forwarding rules in operation on multicast enabled network devices within a respective network.

**26.** A computer program, or a suite of computer programs, comprising a set of instructions to cause a computer, or a suite of computers, to perform the method steps according to any one of claims 1 to 10.

**27.** A computer program, or a suite of computer programs, comprising a set of instructions to cause a computer, or a suite of computers, to perform the method steps according to any one of claims 13 to 18.

Figure 1

Figure 2

## MSDP

D1

D2

RP1

S1,G1

105

RP2

S1,G1 100

PIM Join

DR
109

IGMP
G1

105a

EP 1 211 842 A1

Physical connection =  ———

Peering         =  ▬▬▬

Figure 3

Figure 4

MSDP Peers

401 MSDP session controller

Configuration settings

403 Message handler

405 SA cache

407

409 Post-processor

Input to control processing

301

EP 1 211 842 A1

18

```
                    ┌──────────────────────┐
                    │  Start: Infinite Loop │
                    └──────────────────────┘
                               │
                               ▼
S5.1              ╱◇╲                    Yes      ┌──────────────────────┐
            ╱ Time to check ╲──────────────────►  │ Read configuration   │   S5.2
            ╲ changes to Peers ? ╱                │ settings 407 relating to │
                  ╲◇╱                              │ peering status        │
                   │ No                            └──────────────────────┘
                   ▼
S5.3              ╱◇╲                    Yes      ┌──────────────────────┐
            ╱ Time to view updates ╲────────────► │ Post processing      │   S5.4
            ╲ to SA Cache ?        ╱              │ of SA cache          │
                  ╲◇╱                              └──────────────────────┘
                   │ No
                   ▼
S5.5              ╱◇╲                    Yes      ┌──────────────────────┐
            ╱ Time to update ╲──────────────────► │ Post-                │   S5.6
            ╲ Peer Summary    ╱                    │ processing           │
            ╲ HTML page ?    ╱                     └──────────────────────┘
                  ╲◇╱
                   │ No
                   ▼
S5.7              ╱◇╲                    Yes      ┌────────────────────────────┐
            ╱ Time to check whether ╲───────────► │ Read configuration settings 407 │   S5.8
            ╲ there are changes to  ╱             │ relating to SA messages: add,  │
            ╲ outgoing SA          ╱              │ delete and advertise SA messages │
            ╲ messages?          ╱               │ to peers listed (number of peers = │
                  ╲◇╱                             │ n)                          │
                   │ No        i = 0              └────────────────────────────┘
                   ▼
                   ○
```

Figure 5a

**Figure 5b**

i = n: end of list

S5.9 — Check all peers in list

Check Peer i

Increment i: move to next peer in list — S5.15

S5.10 — Is peer i down && does status flag indicate that Peer i should be up?

Yes → Try to Restart peering with peer i — S5.11

No ↓

S5.12 — Has message been received from peer i within last 90 sec ?

No → Shutdown peering with peer i – close socket between session controller 401 and peer i — S5.13

Yes ↓

S5.14 — Is peer i up ?

No →

Yes ↓

S5.16 — *Service inbound buffer for peer i and parse data up to buffer limit,* send keepalive messages if required, *change peers status flag in peer list if outcome of S5.12 is Null*

R1                  R1

R3                  R4

———— MSDP peering (full mesh)

→ SA forward path(stage 1)

Figure 6a

SA originated at R1 , forwarded to R2, R3 and R4

R1                  R2

R3                  R4

Figure 6b

Stage1 = SA originated at R1 , forwarded to R2, R3 and R4

Stage 2 = R2, R3 and R4 forward accepted SA to ALL peers except R1

Stage 3 = reflected SA messages fail peer-RPF rule and are dropped

EP 1 211 842 A1

File  Edit  View  Favorites  Tools  Help

Back   Forward   Stop   Refresh   Home   Search   Favorites   History   Mail   Print   Links  Bes

Address  http://stats.ftb.bt.co.uk/msdp.html

# MSDP Monitor Status (Updated Every 10 seconds)
## Last Update = Tue Nov 14 20:22:06 2000

| Peer | Admin Status | Operational Status | Up/Down Time | Reset Count | SA Count |
|---|---|---|---|---|---|
| charlie.futures.bt.co.uk | UP | UP | 1d8 h | 0 | 1960 |
| pitt.futures.bt.co.uk | UP | UP | 1d8 h | 0 | 1960 |
| new-attlee.futures.bt.co.uk | UP | UP | 1d8 h | 0 | 1960 |
| futures-b48.futures.bt.co.uk | UP | UP | 1d8 h | 0 | 1960 |
| eden.futures.bt.co.uk | UP | UP | 1d8 h | 0 | 1960 |
| queenie.futures.bt.co.uk | UP | UP | 9 :12:46 | 1 | 1960 |
| t2c1-l1.us-ny.concert.net | UP | UP | 9 :12:15 | 0 | 1915 |

Done                                                                 Internet

Figure 7

EP 1 211 842 A1

Figure 8

MSDP Test and Monitor - Microsoft Internet Explorer

File  Edit  View  Favorites  Tools  Help

Back  Forward  Stop  Refresh  Home  Search  Favorites  Links

Address  http://stats.ftb.bt.co.uk/cgi-bin/msdp-html-new

| MSDP Peer IP Address | Status |
|---|---|
| 172.25.18.247 | |
| 172.25.18.251 | |
| 172.25.18.241 | |
| 172.25.18.245 | |
| 172.25.18.250 | |
| 172.25.18.248 | |
| 166.49.166.240 | |

Router address:

Add ⦿
Delete ○

Enter  Reset

# Main Menu

Internet

23

Figure 9

EP 1 211 842 A1

Figure 10

Match SA Cache Entries = 5
Click on Browser "Stop" button to stop page refresh

Main Menu

| Peer | Source 132.146.239.170 | Group 239.255.32.200 | Rp 132.146.239.169 | Uptime (ww:dd:hh:mm:ss) | Last Seen (hh:mm:ss) | Times Seen Avg Gap |
|---|---|---|---|---|---|---|
| 172.25.18.247 | SA Received from this Peer | | | 0:0:0:5:14 | 0:1:14 | 4 75 |
| 172.25.18.251 | SA sent to this Peer | | | | | |
| 172.25.18.244 | SA Received from this Peer | | | 0:0:0:5:14 | 0:1:14 | 4 75 |
| 172.25.18.245 | SA Received from this Peer | | | 0:0:0:5:14 | 0:1:14 | 4 75 |
| 172.25.18.250 | SA Received from this Peer | | | 0:0:0:5:14 | 0:1:14 | 4 75 |
| 172.25.18.248 | SA Received from this Peer | | | 0:0:0:5:14 | 0:1:14 | 4 75 |
| 166.49.166.240 | | | | | | |

## Figure 11

1105

1101    1103    SA total = 1712    1107    1109    1111

1113

## Main Menu

| Source | Group | RP | Uptime (w:d:h:m:s) | Last Seen (h:m:s) | Times Seen Avg Gap |
|--------|-------|-----|--------------------|-------------------|---------------------|
| 132.146.110.179 | 239.255.255.255 | 172.25.18.247 | 0:2:3:29:59 | 0:1:32 | 2193 85 |
| 172.25.10.186 | 239.255.0.2 | 172.25.18.247 | 0:2:3:29:59 | 0:0:31 | 3090 60 |
| 172.25.10.186 | 239.255.0.3 | 172.25.18.247 | 0:2:3:29:59 | 0:0:31 | 3090 60 |
| 132.146.112.191 | 224.2.252.5 | 172.25.18.241 | 0:2:3:29:59 | 0:0:55 | 3887 48 |
| 132.146.239.252 | 239.255.32.6 | 172.25.18.241 | 0:2:3:29:59 | 0:0:55 | 3552 52 |
| 132.146.239.252 | 239.255.32.7 | 172.25.18.241 | 0:2:3:29:59 | 0:0:55 | 3540 52 |
| 132.146.112.191 | 224.2.145.17 | 172.25.18.241 | 0:2:3:29:59 | 0:0:55 | 3861 48 |
| 132.146.112.191 | 224.2.231.141 | 172.25.18.241 | 0:2:3:29:59 | 0:0:55 | 3888 48 |
| 132.146.112.191 | 224.2.162.251 | 172.25.18.241 | 0:2:3:29:59 | 0:0:55 | 3878 48 |
| 192.88.194.132 | 233.2.171.1 | 192.88.192.254 | 0:2:3:29:59 | 0:0:31 | 3077 |

EP 1 211 842 A1

## Figure 12

SA Match Total = 7

Main Menu

| Source | Group | RP | Peer | Uptime (w:d:h:m:s) | Last seen (h:m:s) | Times Seen Avg Gap |
|--------|-------|-----|------|--------------------|-------------------|--------------------|
| 130.237.224.222 | 224.2.242.7 | 130.237.211.1 | 172.25.18.250 | 0:2:4:5:7 | 0:0:52 | 3113 60 |
| 130.237.224.222 | 224.2.242.7 | 130.237.211.1 | 172.25.18.251 | 0:2:4:5:7 | 0:0:50 | 3113 60 |
| 130.237.224.222 | 224.2.242.7 | 130.237.211.1 | 172.25.18.241 | 0:2:4:5:7 | 0:0:50 | 3112 60 |
| 130.237.224.222 | 224.2.242.7 | 130.237.211.1 | 172.25.18.245 | 0:2:4:5:7 | 0:0:52 | 3113 60 |
| 130.237.224.222 | 224.2.242.7 | 130.237.211.1 | 172.25.18.247 | 0:2:4:5:7 | 0:0:51 | 3113 60 |
| 130.237.224.222 | 224.2.242.7 | 130.237.211.1 | 166.49.166.240 | 0:1:4:57:35 | 0:0:51 | 1727 60 |
| 130.237.224.222 | 224.2.242.7 | 130.237.211.1 | 172.25.18.248 | 0:1:4:57:34 | 0:0:51 | 1729 60 |

**European Patent Office**

## EUROPEAN SEARCH REPORT

Application Number

EP 00 31 0634

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GAVALAS D ET AL: "Advanced network monitoring applications based on mobile/intelligent agent technology" COMPUTER COMMUNICATIONS,NL,ELSEVIER SCIENCE PUBLISHERS BV, AMSTERDAM, vol. 23, no. 8, April 2000 (2000-04), pages 720-730, XP004192592 ISSN: 0140-3664 * abstract * * figures 1-3 * * page 721, column 1, line 1 - page 722, column 2, line 18 * | 1-27 | H04L12/18 H04L12/26 H04L12/24 |
| A | BERNABEU-AUBAN J M ET AL: "Optimizing a generalized polling protocol for resource finding over a multiple access channel" COMPUTER NETWORKS AND ISDN SYSTEMS,NL,NORTH HOLLAND PUBLISHING. AMSTERDAM, vol. 27, no. 10, 1 September 1995 (1995-09-01), pages 1429-1445, XP004062571 ISSN: 0169-7552 * the whole document * | 1-27 | |
| A | US 5 007 017 A (KOBAYASHI HIDEAKI) 9 April 1991 (1991-04-09) * abstract * * column 6, line 52 - column 7, line 28 * * figures 4-7 * | 13-21,23 | TECHNICAL FIELDS SEARCHED (Int.Cl.7) H04L |
| A | US 5 373 503 A (CHEN KWANG-CHENG) 13 December 1994 (1994-12-13) * abstract * * column 2, line 58 - column 4, line 2 * * column 5, line 29 - column 6, line 40 * * column 11, line 21 - column 12, line 12 * | 1-12,22, 24-26 | |

The present search report has been drawn up for all claims

| Place of search | Date of completion of the search | Examiner |
|---|---|---|
| THE HAGUE | 19 June 2001 | Cichra, M |

## ANNEX TO THE EUROPEAN SEARCH REPORT
## ON EUROPEAN PATENT APPLICATION NO.

EP 00 31 0634

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2001

| Patent document cited in search report | | Publication date | Patent family member(s) | | Publication date |
|---|---|---|---|---|---|
| US 5007017 | A | 09-04-1991 | JP 1915785 C | | 23-03-1995 |
| | | | JP 6048811 B | | 22-06-1994 |
| | | | JP 62234439 A | | 14-10-1987 |
| US 5373503 | A | 13-12-1994 | NONE | | |

EPO FORM P0459

For more details about this annex : see Official Journal of the European Patent Office, No. 12/82